# EUROPEAN PATENT SPECIFICATION

(11) **EP 3 867 451 B1**
(45) Date of publication and mention of the grant of the patent: **13.04.2022**
(21) Application number: 19813395.1
(22) Date of filing: 11.11.2019
(51) Int. Cl.: E02B 17/00, B08B 9/023, B23D 57/00

(54) **APPARATUS FOR SERVICING A STRUCTURE**
VORRICHTUNG ZUM WARTEN EINER STRUKTUR
APPAREIL D'ENTRETIEN D'UNE STRUCTURE

(30) Priority: 09.11.2018 GB 201818300
(43) Date of publication of application: 25.08.2021
(73) Proprietor: Rototech Pte Ltd, Singapore 118518 (SG)
(72) Inventor: HARTOG, Simon, Singapore 189721 (SG); VOS, Andries, 9411 SB Beilen (NL); KLEINE, Peter, 9411 SB Beilen (NL); WESTERBRINK, Michael, 9411 SB Beilen (NL); KENDALL, Stuart, Singapore 508960 (SG)
(74) Representative: Cross, James Peter Archibald
(86) International application number: PCT/SG2019/050550
(87) International publication number: WO 2020/096529

(56) References cited:
- WO-A1-86/06696
- US-A- 4 007 705
- US-A- 4 205 694
- US-A- 4 677 998
- US-A- 5 626 438
- US-A1- 2010 235 018
- US-A1- 2014 158 171
- US-A1- 2016 059 939
- US-B1- 6 371 696

## Description

### Field of the Invention

The present invention relates to apparatus for servicing a structure, such as a support structure including but not limited to marine support structures such as risers, conductors, caissons piles, or legs for marine platforms, jetties or wharves, or a pipe.

### Background of the Invention

Marine support structures typically suffer from ageing and degradation, particularly in the 'splash zone', which is the part of the structure that is periodically covered and uncovered by water, for example as a result of tidal range, wave action and/or splashing. Ageing may include corrosion and physical damage caused by wave action and impacts. Degradation may include accumulation of marine growth, such as weed, barnacles etc.

Marine support structures therefore need to be serviced, for example by cleaning, inspection, and coating or painting, to ensure continued performance and to extend their life. Conventionally, servicing is carried out by divers but this can be extremely difficult and hazardous, particularly in the splash zone, and is often not fully effective.

US-A-2014/158171 discloses apparatus for cleaning marine debris from a pile, comprising a truss cage comprising two halves that are fastened around a pile, and traction motors with caterpillar treads for vertical movement. A trolley rides along tracks on the outside of the frame and carries a water jet for cleaning the pile.

US-A-2016/059939 discloses an apparatus according to the preamble of independent claims 1 and 4.

### Statements of the Invention

The invention is defined by the accompanying claims.

According to one embodiment, there is provided apparatus for servicing a structure, comprising a frame for assembly or positioning around the structure, the frame including first and second supports at axially opposite ends thereof; at least one pair of first and second support arms pivotally attached at proximal ends thereof to the first support and carrying respective rotating members arranged to contact the structure and driveable to move the frame along the structure; and a carriage arranged for circumferential movement, carrying one or more tools for servicing the structure.

The above arrangement may advantageously allow tools to be mounted on the frame without interference from the rotating members and arms, as these are mounted at the opposite end of the frame from the carriage.

The above arrangement may advantageously allow the arms to be easily accessed, for example for assembly, particularly where they are provided at an upper end of the frame.

The arms may be removably attached to the frame, for example to facilitate assembly and/or to allow the arms to be attached to frames of different sizes, for servicing structures of different sizes.

The apparatus may be provided as a kit of parts (not claimed) including frames or frame sections of different sizes, to which the arms may be interchangeably attached.

The frame is generally cylindrical in form, without the need for concentric parts at different radii, thus allowing the frame to be relatively light and/or compact.

The first and second arms may extend in opposite axial directions, such that the first arm extends beyond an end of the frame, and the second arm extends through the frame, for example through an aperture between struts that connect the first and second supports together. This may also allow the apparatus to be light and compact.

The arms may be independently attached to the first support. The arms may be driven by hydraulic cylinders, allowing the pivot angles of the arms, which carry the rotating members, to be altered as the frame moves along the structure. This may improve to the ability of the apparatus to move over obstacles, such as pre-wrapped composite wrappings, pipe unions or other such obstructions. This arrangement may allow or facilitate the apparatus to climb a tapered structure.

The apparatus may include one or more distance or position sensors arranged to determine the absolute or relative position of at least part of the apparatus relative to the structure, for example the distance travelled by the frame along the structure and/or the circumferential position of the carriage.

According to another embodiment of the invention, there is provided apparatus for servicing a structure, comprising: a frame for assembly or arrangement around the structure, the frame including a support at a position intermediate axial ends of the frame; at least one pair of first and second arms pivotally attached at proximal ends thereof to the support; and at least one pair of first and second rotating members, attached to distal ends of the respective first and second arms, for contact with the structure; the first and second arms extending in axially opposite directions and being pivotable so as to move the corresponding first and second rotating members towards or away from the structure.

The apparatus may comprise a first module connectable to one or more additional modules in series along the structure, the first module being configured as a traction or drive module and the additional module(s) being configured for servicing the structure.

### Brief Description of the Drawings

Specific embodiments of the present invention will now be described with reference to the accompanying drawings, in which:
Figure 1 is a perspective view from above of an apparatus in a first embodiment of the invention;
Figure 2 is a first side elevation of the apparatus of the first embodiment;
Figure 3 is a second side elevation of the apparatus of the first embodiment, orthogonal to the first side elevation;
Figure 4 is a cross-section through the plane A-A in Figure 2, indicating the position of a support structure;
Figure 5 is a top view of the apparatus of the first embodiment;
Figure 6 is a perspective view from above of an apparatus in a second embodiment of the invention;
Figure 7 is a perspective view from below of the apparatus of the second embodiment;
Figure 8 is a first side elevation of the apparatus of the second embodiment;
Figure 9 is a second side elevation of the apparatus of the second embodiment,
orthogonal to the first side elevation;
Figure 10 is a cross-section in the plane A-A in Figure 9;
Figure 11 is a cross-section in the plane B-B in Figure 9;
Figure 12 is a top view of the apparatus of the second embodiment;
Figure 13 is a view of a kit of parts for assembly to form apparatus according to the first or second embodiments;
Figure 14 is a diagram of the operations of an apparatus in embodiments of the invention;
Figure 15 is a diagram of part of a hydraulic system of an apparatus in embodiments of the invention;
Figure 16 is a diagram illustrating a remote control system for operating an apparatus in embodiments of the invention;
Figure 17 is a first side elevation of an apparatus in a third embodiment of the invention;
Figure 18 is a second side elevation of the apparatus of the third embodiment,
orthogonal to the first side elevation;
Figure 19 is a perspective view from above of the apparatus of the third embodiment;
Figure 20 is a bottom view of the apparatus of the third embodiment;
Figure 21 is a top view of the apparatus of the third embodiment;
Figure 22 is a partial cross-sectional view in the plane A-A of Figure 21;
Figure 23 is a diagram showing different configurations of the apparatus of the third embodiment as a traction module, with additional modules; and
Figure 24 shows a detailed view of a connection system between modules in the configurations of Figure 23.

### Detailed Description of Embodiments

In the description below, the orientation of the apparatus will be described as assembled around a vertically elongate support structure 30. 'Circumferential' and 'tangential' refers to a circumference around a notional central vertical axis, and 'radial' to a direction perpendicular to that axis.

Where dimensions are shown in the drawings, these are given in millimetres. The dimensions are not limiting on the size of specific embodiments and are provided purely by way of example.

For clarity, not all instances of a particular part are indicated by reference numerals in the drawings. It will be understood by inspection of the drawings as a whole which parts are referred to. Similar parts between different embodiments are indicated by the same reference numeral.

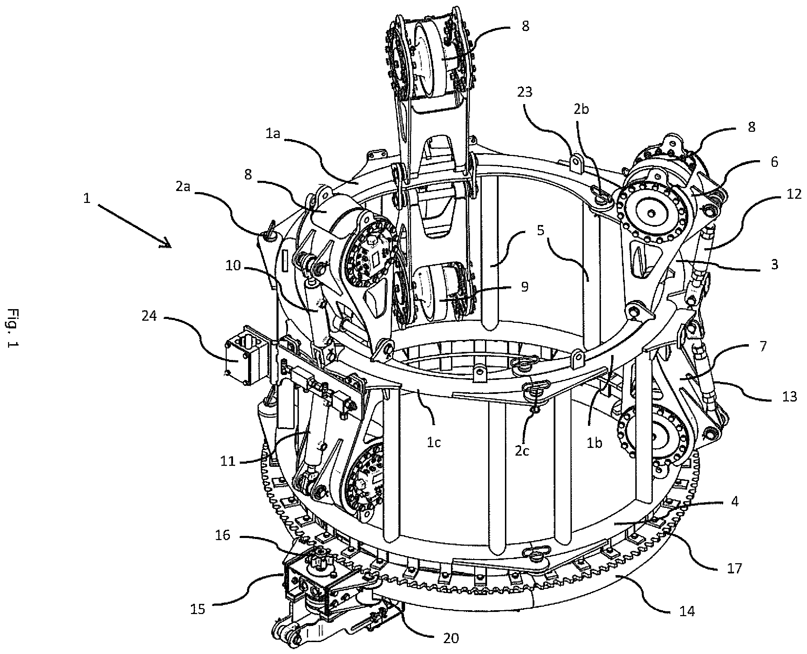

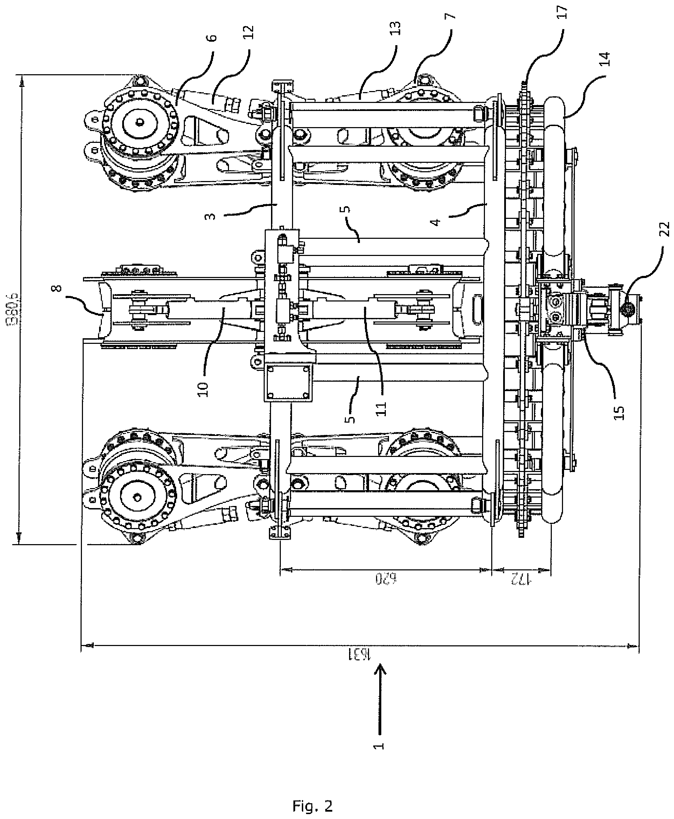

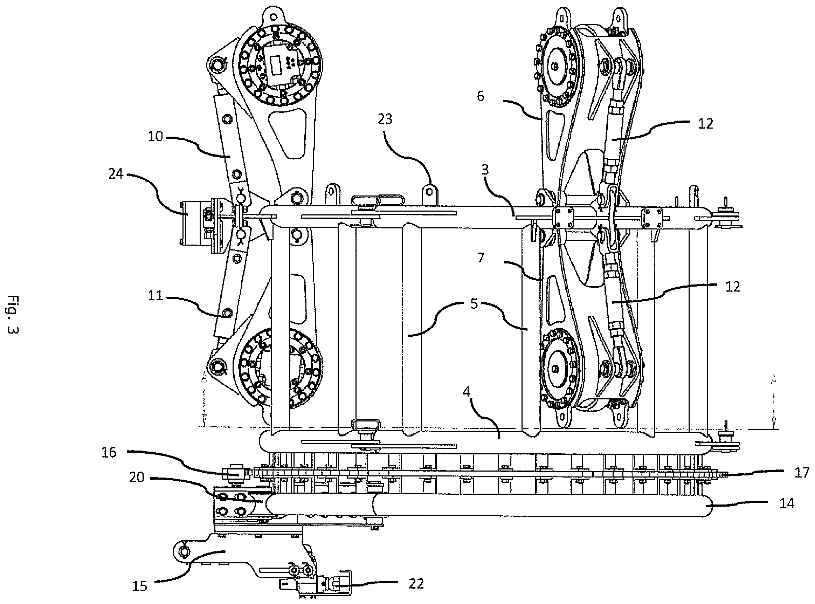

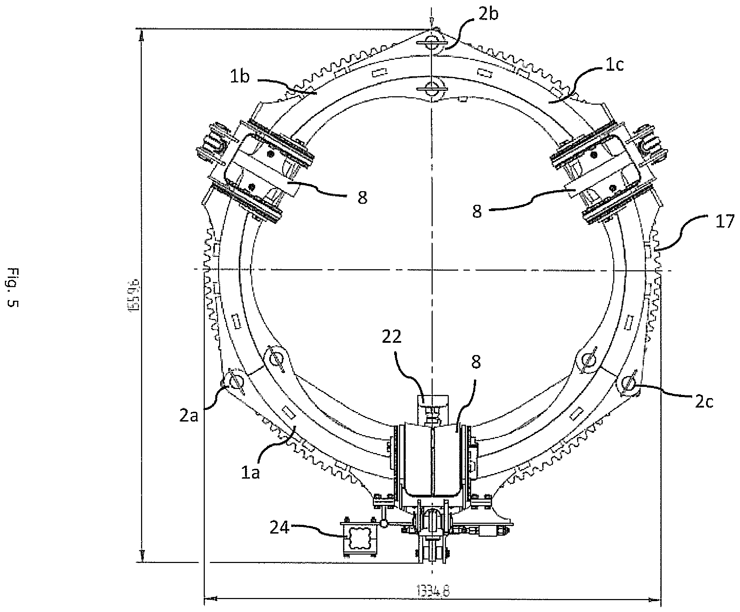

A first embodiment of the invention is described below with reference to Figures 1 to 5. A cage or frame 1 comprises cage or frame segments or sections 1a, 1b, 1c which are removeably connected together at frame connection points 2a, 2b, 2c, for example using removable pins. In use, the frame segments 1a, 1b, 1c are assembled around the support structure 30 to be serviced. The frame segments 1a, 1b, 1c include lifting points 23 for attachment of cables or the like, for lifting the frame segments 1a, 1b, 1c into position and/or for retrieving them after use. Preferably, each frame segment 1a, 1b, 1c is light enough to be manually lifted into position.

The frame 1 comprises an upper support 3 and a lower support 4, interconnected by struts 5. In this embodiment, the upper and lower supports 3, 4 are circular in shape, and coaxial. The struts 5 extend generally vertically between the upper and lower supports 3, 4. The upper support 3, lower support 4 and struts 5 are preferably substantially rigid and are connected together so that the frame 1, when assembled, is substantially rigid.

A plurality of (in this case 3) pairs of upper and lower arms 6, 7 are connected to the upper support 3 at different circumferential positions, preferably evenly circumferentially spaced around the upper support 3, for example by 120° in this embodiment.

Each arm 6, 7 is pivotally connected to the upper support 3 about a tangential, horizontal pivot axis, for example by means of a respective axle or spindle. In this embodiment, the arms 6, 7 are pivotable about respective axes on the upper and lower sides of the upper support 3, but may alternatively be pivotable about the same axis. The upper and lower arms 6, 7 are pivotable in opposite directions relative to each other so that they can both simultaneously move towards the support structure 30 or away from the support structure 30. The upper and lower arms 6, 7 may be pivotable independently of each other, so that the angle between the upper and lower arms 6, 7 may vary.

Each arm 6, 7 carries a respective wheel, roller or other rotating member 8, 9 arranged to contact the support structure 30. The wheels 8, 9 may have contact surfaces arranged to enhance traction against the support structure 30 and/or to reduce wear to the wheels 8, 9. Each pair of wheels 8, 9, carried by a corresponding pair of arms 6, 7, may be mutually independently rotatable.

At least one of the pairs of arms 6, 7 are reciprocally driveable to pivot towards and away from the support structure 30 so that the corresponding wheels 8, 9 respectively clamp and release the support structure 30. Preferably, this pair of arms 6, 7 is driven by respective hydraulic cylinders 10, 11. The control of the hydraulic cylinders 10, 11 may be interconnected so that the pair of arms is driven in synchronism. The hydraulic cylinders 10, 11 may be supplied by respective hydraulic hoses (not shown), secured by a hose clamp 24.

Others of the pairs of arms 6, 7 may be adjustably held in a pivotal position, for example by adjustable length bars or bottle screws 12, 13, according to the diameter of the support structure 30 to be serviced.

The lower arms 7 are arranged to pass between the struts 5 to enable the corresponding wheels 9 to contact the support structure 30.

At least one of the wheels 8, 9 is driveable reciprocally in either one of opposite directions (e.g. forward and backward) so as to move the apparatus respectively up and down the support structure 30. Preferably, the driveable wheel(s) 8, 9 are provided on the reciprocally driveable arms 6, 7. Others of the wheels 8, 9 may not be driven, but may freely rotate, preferably independently of each other, so as to act as guides for movement of the apparatus up and down the support structure 30.

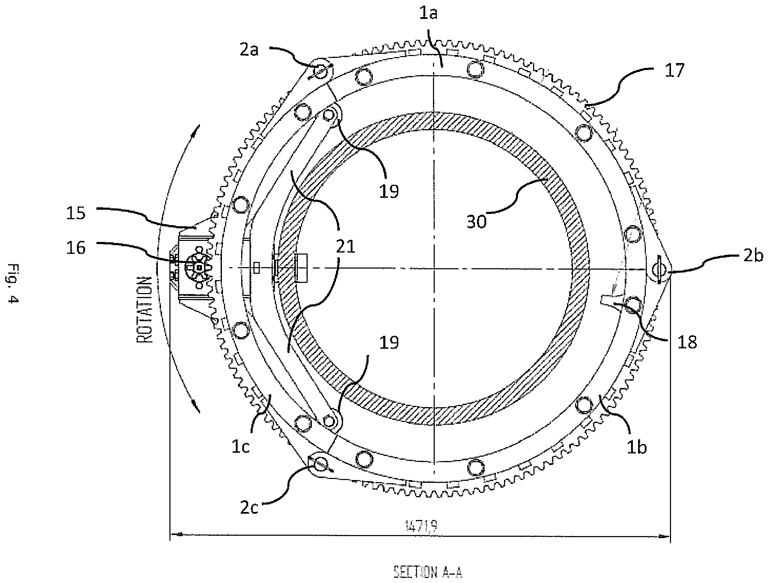

The lower support 4 supports a guide rail 14 for guiding a carriage 15 circumferentially around the lower part of the frame 1. The carriage 15 has a drive gear 16 that engages a gear track 17 arranged circumferentially and horizontally around the lower part of the frame 1. The drive gear 16 is driven so that the carriage 15 moves circumferentially around the guide rail 14. The carriage 15 may be driveable circumferentially through approximately 360°, but preferably the movement of the carriage 15 is limited to one complete rotation by a carriage stop 18 provided adjacent the guide rail 14, as shown in Figure 4.

The carriage 15 preferably does not contact the support structure 30, as accumulation on the support structure 30 could impede the progress of the carriage 15. Instead, the carriage 15 is supported by a pair of inner rollers 19 that contact an inner side of the guide rail 14, and a pair of outer rollers 20 that contact an outer side of the guide rail 14. The inner rollers 19 are mounted on respective carriage arms 21 that extend horizontally to either side of the carriage 15, for improved stability.

In an alternative embodiment, the functions of the guide rail 14 and the gear track 17 may be combined. For example, the gear track 17 and drive gear 16 could be omitted and one or more of the inner or outer rollers 19, 20 may be driven so as the drive the carriage 15 around the guide rail 14. Alternatively, the guide rail 14 may be omitted and the gear track 17 modified so as to provide a guiding function. Instead of a gear/gear track or rack and pinion arrangement, an alternative linear drive arrangement may be used, such as a roller pinion or friction drive.

The carriage 15 is arranged to carry one or more tools 22 for servicing the support structure 30. By moving the frame 1 up and down the support structure 30 using the driveable wheel(s) 8, 9, and moving the carriage 15 circumferentially around the support structure 30, the tool(s) 22 may reach substantially any part of the external surface of the support structure 30, at least within the splash zone and subject to any restrictions due to hydraulic lines and the like.

The tool(s) 22 may be moveably mounted on the carriage 15, to allow movement of the tool(s) 22 relative to the carriage 15. For example, the tool(s) 22 may be reciprocally driveable towards and away from the support structure 30, for example in a radial direction.

Examples of the tool(s) that may be mounted either singly or together on the carriage 15, and which may be interchangeable, include:
- a high-pressure water nozzle for cleaning the surface of the support structure 30
- a wall thickness measuring probe for measuring the wall thickness of the support structure 30, for example using ultrasound
- a video camera 27 for inspection of the servicing site
- a clearance sensor for sensing clearance from the surface of the support structure
- a painting tool, such as a paint roller or brushes, for painting the surface of the support structure 30
- a wrapping tool for applying a protective wrapping to the support structure 30
- a cutting tool for cutting a part of the support structure 30, for example using high-pressure abrasive cutting.

In the second embodiment, the carriage 15 carries a camera 27, such as a video camera, in addition to a cleaning tool 22.

The apparatus may include one or more distance sensors, to determine the distance travelled along the support structure 30. The distance sensor(s) may for example determine the number of rotations of the wheel(s) 8, 9, for example by using one or more optical or magnetic angular position sensors.

The carriage 15 may include one or more rotational position sensors (e.g. optical or magnetic sensors) able to detect an absolute or relative circumferential position of the carriage 15 relative to the frame 1, for example by detecting reference position markings on the guide rail 14 or the gear track 17.

The distance sensor(s) and/or rotational position sensors (s) may be used to determine the position of the tool 22, carriage 15 or another part of the apparatus on the support structure 30. This may allow the apparatus to travel to a predetermined absolute position or to return to a previously visited position, for example where an anomaly or discrepancy has been detected.

The apparatus may be aligned with one or more reference marks on the support structure 30, to allow the apparatus to return to a previously visited position relative to the reference marks. In one example, a horizontal and/or vertical visible mark is made on the support structure 30 corresponding to an initial position of one or more parts of the apparatus, such as the vertical position of the upper support 3 and the circumferential position of a predetermined one of the struts 5, identified for example by a marking such as a distinguishing paint marking. The distance sensor(s) is set to zero. The carriage 15 is to its maximum circumferential position (either clockwise or anti-clockwise), and the rotational position sensor(s) is set to zero. As the apparatus moves along the support structure 30, the distance sensor(s) and rotational position sensor(s) measure the distance travelled in an axial and circumferential direction relate to the initial position. This enables the position of any anomaly or discrepancy on the support structure to be mapped and returned to, if required.

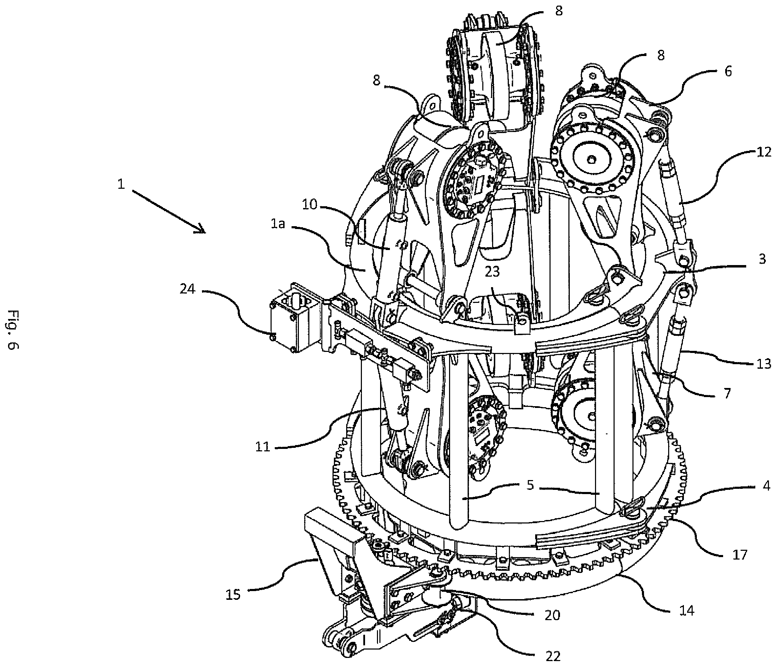

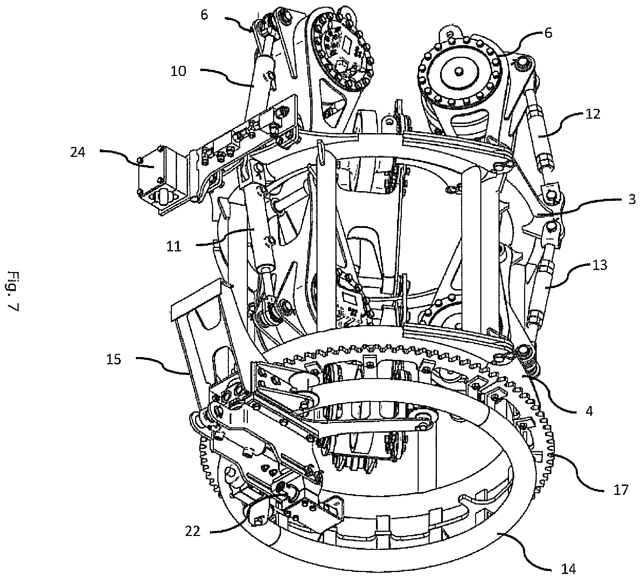

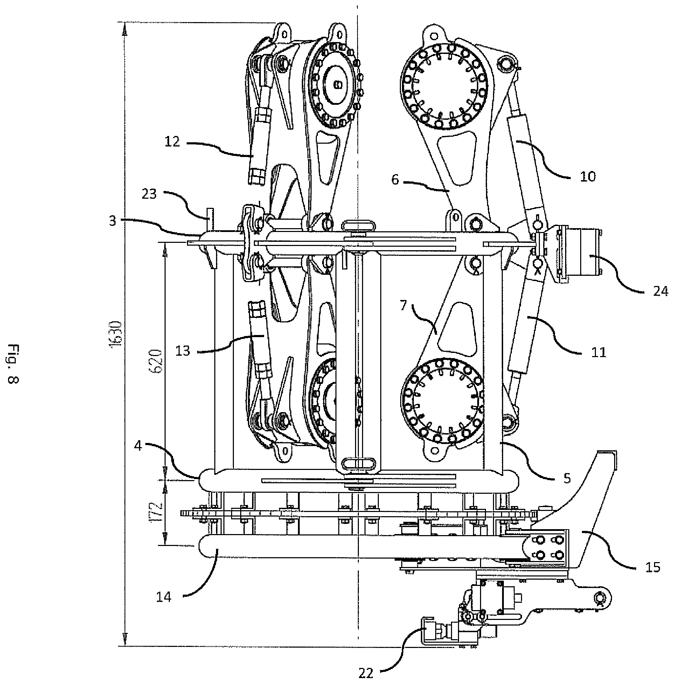

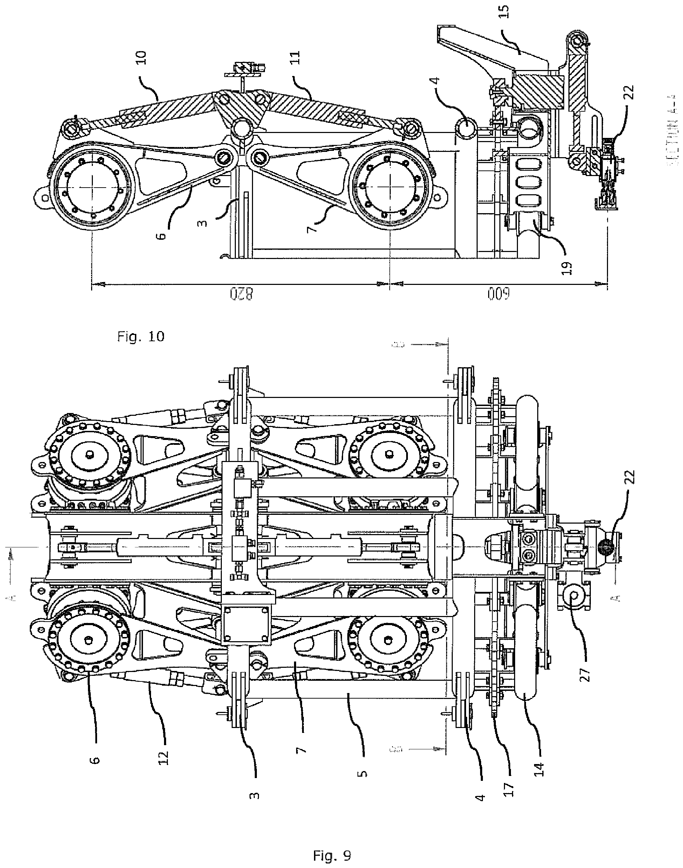

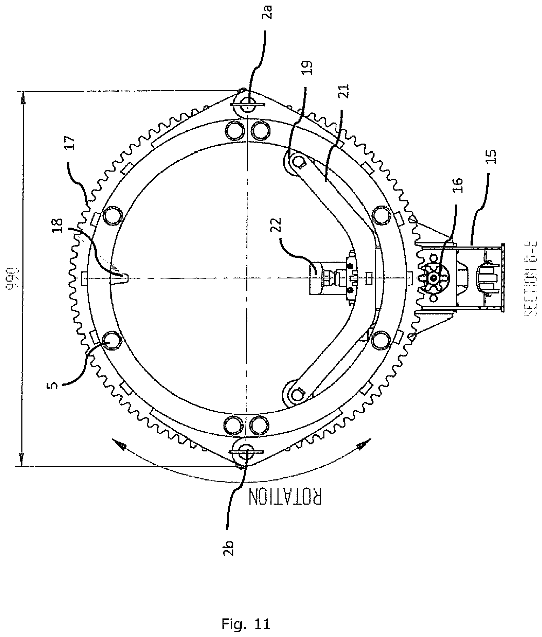

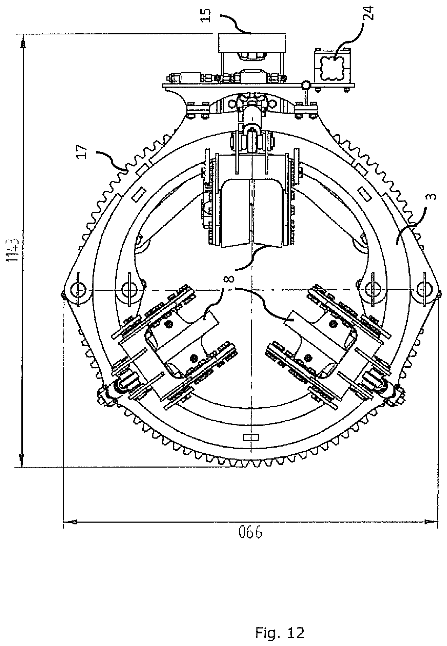

The first embodiment is designed to service support structures 30 with a diameter in the range 22 - 36 inches (0.56-0.91 metres). Alternative embodiments of different sizes and/or numbers of frame segments 1a, 1b, 1c may be provided to service support structures of other diameters. For example, Figures 6 to 12 show a second embodiment which is similar in construction to the first embodiment but has a frame 1 of smaller diameter designed to service a support structure 30 with a diameter in the range 9% - 22 inches (0.24 - 0.56 metres). The frame 1 comprises two frame segments 1a, 1b, which are semi-cylindrical and are assembled together to form a cylindrical frame 1.

The second embodiment has three pairs of upper and lower arms 6, 7 as in the first embodiment, evenly spaced around the upper support 3. In other embodiments, particularly those designed for servicing support structures of larger diameter, there may be more than three pairs of arms 6, 7.

The arms 6, 7, together with the wheels 8, 9, hydraulic cylinders 10, 11 and adjustable length bars 12, 13, may be removably attached to the frame segments 1a, 1b, 1c. These components may then be interchangeably used with the frame segments 1a, 1b, 1c of the first embodiment and the frame segments 1a, 1b of the second embodiment. Different carriages 15 may be required for the first and second embodiments, due to the different radius of curvature. Alternatively, a single adjustable carriage 15 may be interchangeably used between the first and second embodiments, for example with adjustable carriage arms 21.

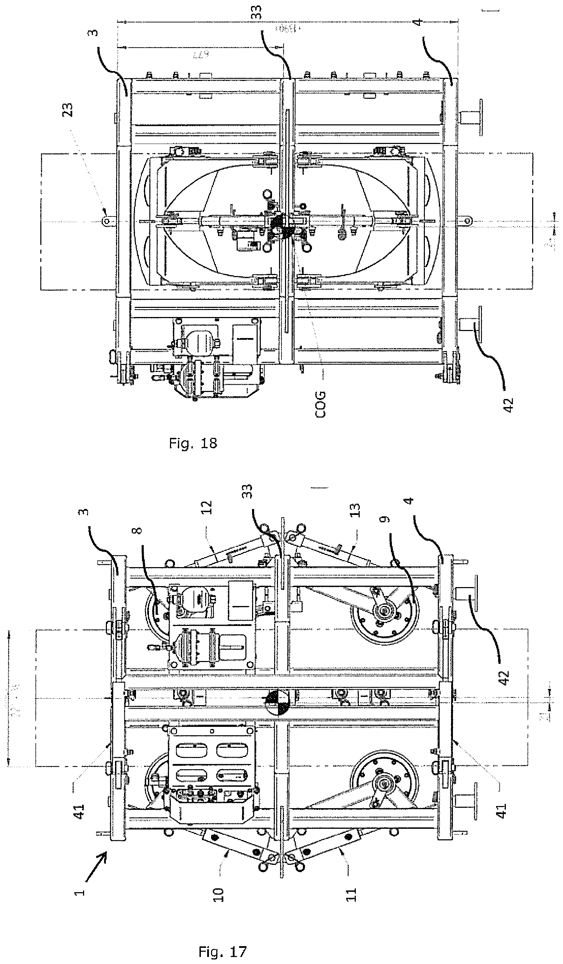

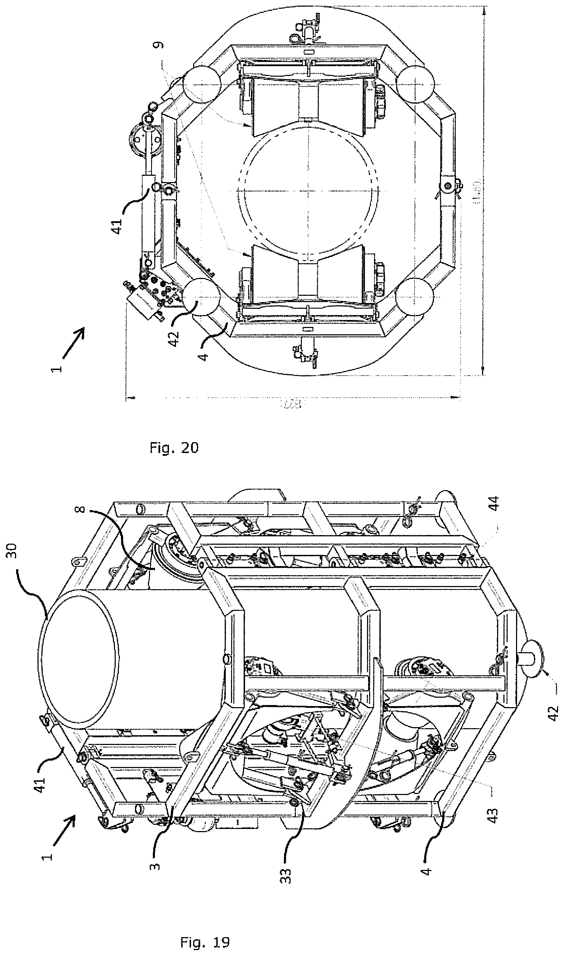

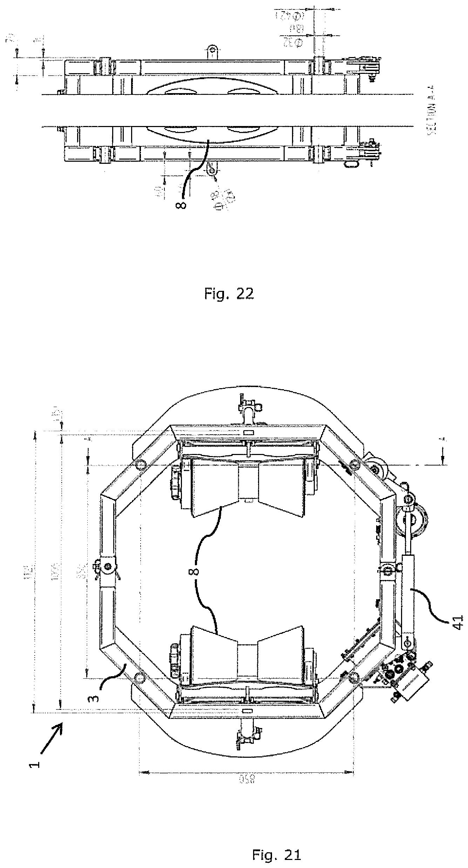

Figures 17 to 22 show an apparatus in a third embodiment, which differs from the first and second embodiments in that the cage or frame 1 includes a middle support 33 to which two pairs of upper and lower arms 6, 7, carrying corresponding wheels 8, 9, are connected. Hence, the cage 1 comprises three annular horizontal pieces (lower support 3, middle support 33 and upper support 4) connected together by vertically extending struts 5 to form a generally cylindrical structure. Hence, the third embodiment can be thought of as a development of the first and second embodiments in which the middle support 33 performs a similar function to the upper support 4 of the first and second embodiments, and the upper support 4 of the third embodiment is an additional structural part that extends beyond the upper arms 6.

The cage 1 comprises two semi-cylindrical sections 1a, 1b hingedly connected together at connection points 2a, 2b, and lockable together, similarly to the second embodiment. The cage in this example may designed in a larger version for fitting around structures 30 with a diameter of between 22 and 36 inches (0.56 - 0.91 m), or in a smaller version for structures 30 with a diameter of between 8 and 22 inches (0.20-0.56 m).

One pair of arms 6, 7 has a corresponding pair of actuating cylinders 10, 11, while the other pair of arms has a corresponding pair of adjustable length bars 12, 13. The wheels 8, 9 of at least one pair of arms 6, 7 are reciprocally drivable to as to move the apparatus up and down the structure 30.

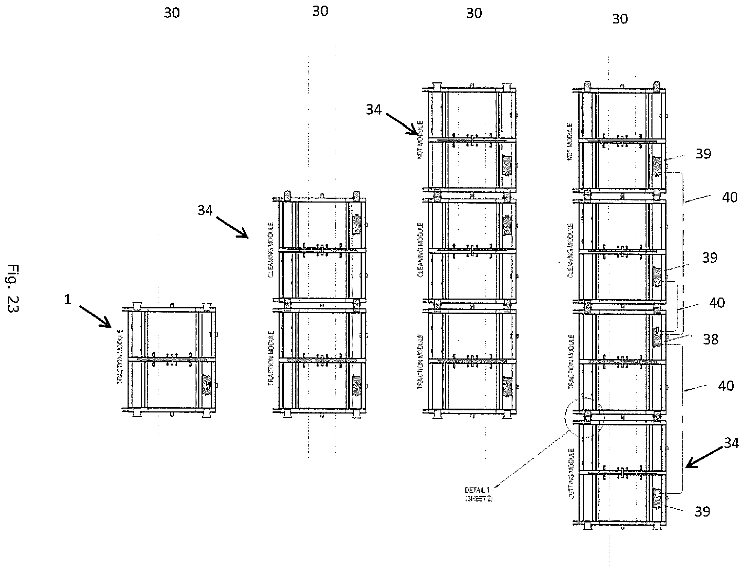

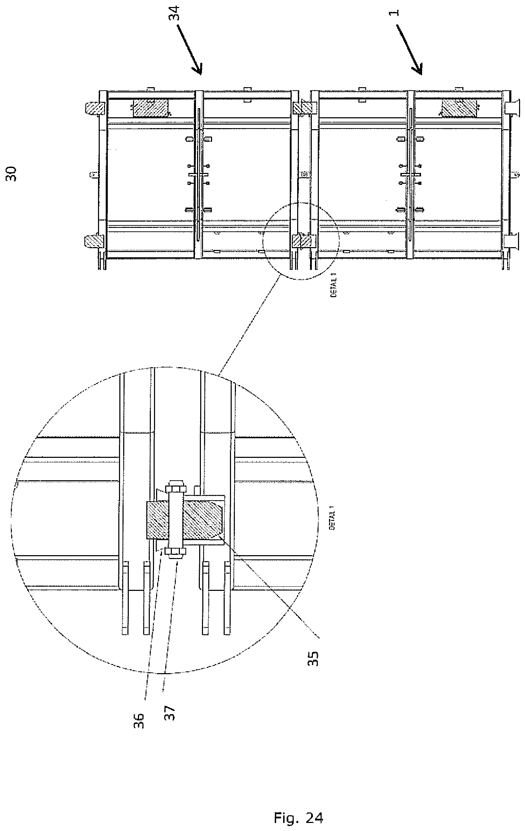

In this embodiment, the apparatus has no guide rail 14 or carriage 15 for carrying tools 22. Hence, the centre of gravity (COG) is close to the geometric centre of the cage 1, as shown in Figures 17 and 18. As shown in Figures 23 and 24, the apparatus is configured as a traction module for connection in series along and around the structure 30 to one or more servicing modules 34, such as a cleaning module, NDT (non-destructive testing) module and/or cutting module. Each additional module comprises a cage or frame of similar construction to that of the traction module, and may comprise two or more pairs of arms 6, 7 with corresponding wheels 8, 9 similar to that of the traction module, except that none of the wheels 8, 9 of the additional module are driveable; instead the servicing modules 34 are driven along the structure 30 by the traction module. Alternatively, the one or more servicing modules may be moved along the structure 30 by some other means, such as one or more winches attached to the structure 30 or to a platform.

The distance travelled along the structure 30 may be measured by a measuring wheel 43 that is supported by the frame 1, for example by middle support 33, and is pivotable into contact with the structure 30. The measuring wheel may be an encoding wheel from which the distance travelled may be detected optically and/or electronically.

As shown in Figure 24, adjacent first and second modules may be connected together by one or more first docking parts on a first module that docks with a corresponding one or more second docking parts of the second module; for example, the first docking part(s) may comprise one or more male docking probes 35 and the second docking part(s) may comprise one or more receptacle(s) 36 into which the corresponding male docking probe(s) 35 fit. The connection may be secured by a locking system such as a quick release bolt 37 that passes through apertures in the male docking probe and the receptacle. Alternative docking and/or securing mechanisms may be used.

The traction module may have a plurality of feet 42 attached to the lower support 4. Preferably, the feet 42 are removable to allow connection of an additional module below the traction module.

The traction module includes a master controller 38 that is removably connectible by leads 40 to one or more corresponding slave controllers 39 on the one or more additional modules. The master controller 38 is controlled from the surface by the remote control unit 25, and passes communication signals and/or electrical power to the slave controllers 39.

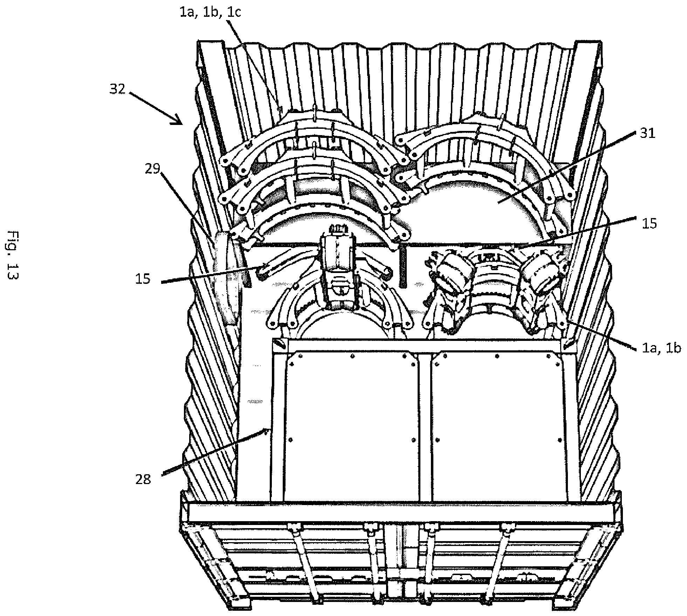

Figure 13 shows a kit of parts that may be provided to allow apparatus of either the first or second embodiment to be assembled, comprising at least the frame segments 1a, 1b, 1c of the first embodiment, the frame segments 1a, 1b of the second embodiment, the arms 6, 7, together with the wheels 8, 9, hydraulic cylinders 10, 11 and adjustable length bars 12, 13 (shown here attached to the frame segments 1a, 1b of the second embodiment), carriages 15 for the first and second embodiments, a set of hydraulic hoses 29, and a hydraulic power supply 28. In this example, the kit of parts is provided in a transportable container 32 including a workbench 31, to facilitate partial assembly of the apparatus before assembly around the support structure 30.

In embodiments designed for support structures 30 of only one diameter, or a small range of diameters, some of the non-driven pairs of arms 6, 7 and wheels 8, 9 may be replaced by other types of guides, such as rollers or wheels of fixed radial position.

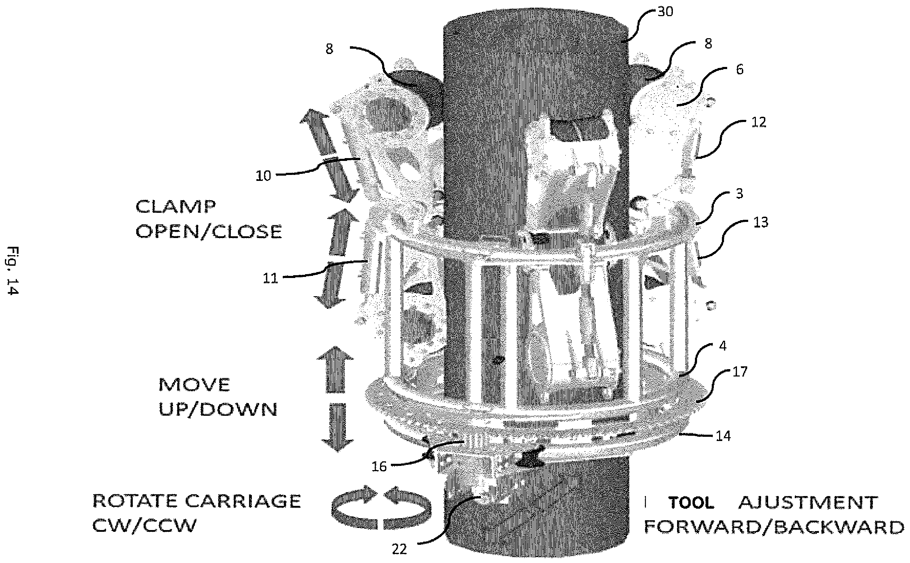

Figure 14 shows examples of driveable functions of the apparatus in embodiments of the invention, such as the embodiments as described above:
i. Clamp open/close, by driving the driveable pivotable upper and lower arms 6, 7 so as to pivot radially outwards/inwards respectively;
ii. Move up/down, by driving the driveable wheel(s) 8, 9 in contact with the surface of the support structure 30 in forward/reverse directions respectively;
iii. Rotate carriage clockwise/anticlockwise, by driving the drive gear 16 in forward/reverse direction respectively;
iv. Tool adjustment forward/backward, by driving the tool 22 radially forward/backward respectively, with respect to the carriage 15.

The driveable functions may be each be powered and/or controlled by hydraulic or electric power, for example by hydraulic hoses and/or electrical cables connected to the apparatus. Hydraulic power is preferable for at least some applications, for example in order to reduce the weight of the apparatus and/or to avoid the use of electricity in a marine environment. A hydraulic power unit may be mounted on a platform and connected to the apparatus by flexible hydraulic hoses.

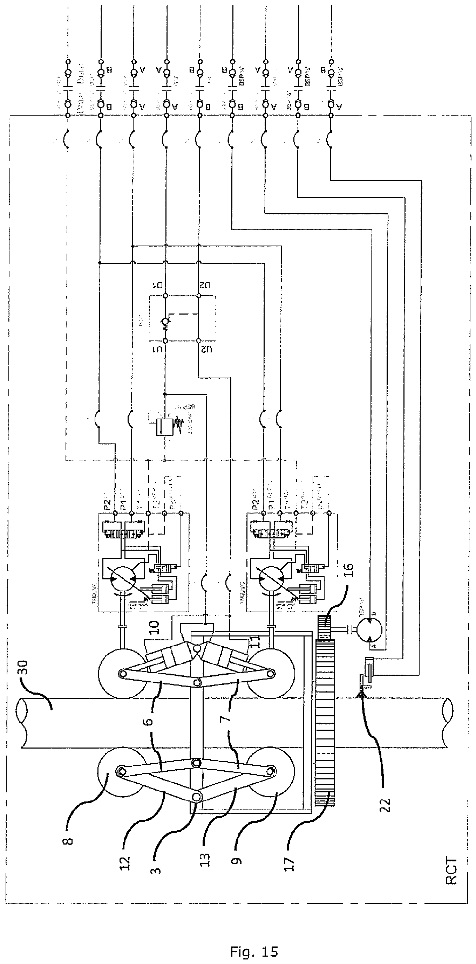

An example of a hydraulic drive system for the apparatus is shown in Figure 15, in which the pivoting of one of the pairs of arms 6, 7, the rotation of the corresponding wheels 8, 9, and in the case of the first and second embodiments, the rotation of the drive gear 16, and the reciprocal driving of the tool 22 are driven by separate hydraulic lines, connected to a hydraulic power unit (not shown).

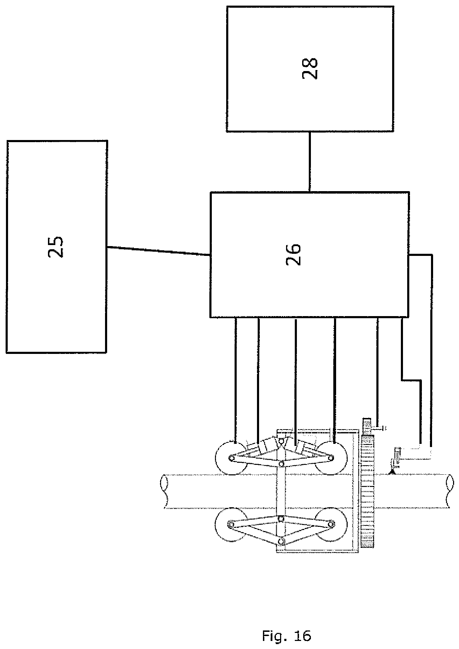

The apparatus is preferably controlled by a remote control unit 25, as shown for example in Figure 16, which allows control of some or all of the functions described above, preferably by means of corresponding user actuable controls. The remote control unit 25 may be connected by a wired or wireless connection to a controller 26 of the functions described above. Power for driving the functions may be provided by a power supply 28, under the control of the controller 26.

Preferably, the drive speeds of the wheels 8, 9 and of the drive gear 16 are controllable independently to adjust for the servicing required. Alternatively or additionally, the remote control unit 25 or controller 26 may be programmable or programmed to carry out a particular service by coordinated control of the different functions, optionally in response to the distance travelled as detected by the distance sensor(s), and/or the circumferential position of the carriage 15 as detected by the circumferential position sensor(s). This may enable a predetermined section of the support structure 30 to be serviced.

The pivot angle of the arms 6, 7 may be varied during use, for example to allow the apparatus to be driven up or down a sloping or curved support member.

The number of wheels 8, 9 that are powered may be varied according to the load to be carried by the apparatus or the operating conditions of the apparatus. The pivoting of more than one of the pairs of arms 6, 7 may be powered, depending on the adjustability or clamping force required.

Embodiments of the present invention may be used for servicing tapering support structures, by varying the degree of pivoting of the arms 6, 7 to adjust for varying diameter as the apparatus moves up and down the support structure.

In an alternative embodiment, the arms 6, 7 may be mounted on the lower support 4 and the guide rail 14 may be mounted on the upper support 3.

Preferably, the frame segments 1a, 1b, 1c are constructed of aluminium tube so as to be lightweight. For example, the mass of the apparatus, excluding hydraulic or electrical lines, may be in the range 200-300 kg.

For larger embodiments, the method of closure by removable pins may be replaced by a hydraulic closure method, in which two or more of the cage or frame segments 1a, 1b, 1c are connected together with hinged connections, actuated for example by hydraulic rams or cylinders 41, as shown for example in Figure 17. The segments 1a, 1b, 1c may be connected together on a suitable surface such as a floating pontoon or barge, supported for example by the feet 42. The hinged connections may be opened such that the cage or frame 1 fits around the support structure 30 to be serviced, then closed so as to secure the frame 1 around the structure 30. The segments 1a, 1b, 1c may be secured together by one or more locking mechanisms, such as locking cylinders 44.

The above embodiments are designed for servicing a circular cylindrical support structure 30 such as a pile, and therefore the frame 1 is approximately circular cylindrical, having an inner diameter slightly larger than the diameter of the support structure 30. Alternative embodiments may have alternative shapes and sizes to match the type of support structure 30 which they are designed to service. For example, a square or rectangular cylindrical frame 1, preferably with a pair of arms 5, 6 on each of the four sides, may be used in an embodiment designed for servicing a square or rectangular cylindrical support structure 30.

The above embodiments may be used in a marine or aquatic splash zone, or at a shallow depth below the surface, such as 10 metres. The embodiments may be modified for operation below 10 metres in depth, for example by the use of suitable hydraulic seals. The embodiments may be used for servicing pipes, to the extent that they are not impeded by the support of the pipes.

Alternative embodiments of the present invention may be used for servicing non-marine or on-shore support structures, such as wind turbines or radio masts. For these applications, the frame segments 1a, 1b, 1c may be provided with one or more detachable or permanently attached wheels for or other transport members, allowing the frame segments to be moved into position around the support structure, along the ground. For example, each frame segment 1a, 1b, 1c may have one or more wheels attached at each side and an additional removable wheel on a truss at the apex of a triangle formed by two wheels on the frame 1 and on the outside of the frame. The segments 1a, 1b, 1c may then be assembled or closed around the support structure 20, for example by means of removable pins or by the hydraulic rams as described above.

The invention is defined by the accompanying claims.

### List of parts and corresponding references

| **Part** | **Reference** | Lifting point | 23 |
|---|---|---|---|
| Cage or frame | 1 | Hose clamp | 24 |
| Cage or frame segment | 1a, 1b, 1c | Remote control unit | 25 |
| Frame connection point | 2a, 2b, 2c | Controller | 26 |
| Upper support | 3 | Camera | 27 |
| Lower support | 4 | Power supply | 28 |
| Strut | 5 | Hydraulic hose | 29 |
| Upper arm | 6 | Structure | 30 |
| Lower arm | 7 | Workbench | 31 |
| Upper wheel/rotating member | 8 | Container | 32 |
| Lower wheel/ rotating member | 9 | Middle support | 33 |
| Upper hydraulic cylinder | 10 | Additional module(s) | 34 |
| Lower hydraulic cylinder | 11 | Male docking probe | 35 |
| Upper adjustable length bar | 12 | Receptacle | 36 |
| Lower adjustable length bar | 13 | Quick release bolt | 37 |
| Guide rail | 14 | Master controller | 38 |
| Carriage | 15 | Slave controller | 39 |
| Drive gear | 16 | Lead | 40 |
| Gear track | 17 | Hydraulic closing ram or cylinder | 41 |
| Carriage stop | 18 | | |
| Inner roller | 19 | Foot | 42 |
| Outer roller | 20 | Measuring wheel | 43 |
| Carriage arm | 21 | Locking cylinder | 44 |
| Tool | 22 | | |

## Claims

1. Apparatus for servicing a structure, comprising:
a frame (1) for assembly or arrangement around the structure, the frame (1) including upper and lower supports (3, 4) provided at axial ends of the frame (1) and a middle support (33) provided between said opposite ends of the frame (1), connected together by vertically extending struts (5) to form a generally cylindrical structure;
at least one pair of first and second arms (6, 7) pivotally attached at proximal ends thereof to the middle support (33); and
at least one pair of first and second rotating members (8, 9), attached to distal ends of the respective first and second arms (6, 7), for contact with the structure;
the first and second arms (6, 7) being pivotable so as to move the corresponding first and second rotating members (8, 9) towards or away from the structure;
**characterised in that**:
the first and second arms (6, 7) extend in axially opposite directions;
and **in that**:
at least one of the first and second arms (6, 7) is arranged to pass between adjacent ones of the struts (5) such that the corresponding first or second rotating member (8, 9) is able to contact the structure.

2. Apparatus of claim 1, including a carriage (15) arranged for circumferential movement at or near an axial end of the frame (1), the carriage (15) carrying, or being arranged to carry, one or more tools (22) for servicing the structure.

3. Apparatus of any preceding claim, including connecting means (35) for removably connecting the apparatus to one or more modules (34) for servicing the structure.

4. Apparatus for servicing a structure, comprising:
a frame (1) for assembly or arrangement around the structure, the frame (1) including first and second supports (3, 4) at axially opposite ends thereof, connected together by axially extending struts (5) to form a generally cylindrical structure;
at least one pair of first and second arms (6, 7) pivotally attached at proximal ends thereof to the first support (3); and
at least one pair of first and second rotating members (8, 9), attached to distal ends of the respective first and second arms (6, 7), for contact with the structure;
the first and second arms (6, 7) being pivotable so as to move the corresponding first and second rotating members (8, 9) towards or away from the support structure;
**characterised in that**:
the first and second arms (6, 7) extend in axially opposite directions, the second arm being arranged to pass between adjacent ones of the struts, such that the second rotating member is able to contact the structure;
and further **characterised by**:
a carriage (15) arranged for circumferential movement at or near the second support (4), the carriage (15) carrying, or being arranged to carry, one or more tools (22) for servicing the structure.

5. Apparatus of claim 4, including a guide rail (14) for guiding the carriage (15) circumferentially, the guide rail (14) being attached to the second support (4).

6. Apparatus of any one of claims 2 to 5, including a track (17) arranged circumferentially around the frame (1), the carriage (15) having a drive member (16) that engages the track (17) and is driveable so as to move the carriage (15) around the track (17).

7. Apparatus of any one of claims 2 to 6, including means for driving the one or more tools (22) relative to the carriage (15).

8. Apparatus of any one of claims 2 to 7, including said one or more tools (22) carried on the carriage (15), the one or more tools (22) comprising at least one of a cleaning tool, a wall thickness measuring tool, a video camera, a clearance sensor, a painting tool, a wrapping tool and a cutting tool.

9. Apparatus of any one of claims 2 to 8, including a circumferential position sensor for sensing a circumferential position of the carriage.

10. Apparatus of any preceding claim, including means (10, 11) for driving the first and/or second arms (6, 7) so as to pivot towards the structure and bring the respective rotating member (8, 9) into contact with the structure.

11. Apparatus of any preceding claim, including a plurality of said pairs of first and second arms (6, 7) and first and second rotating members (8, 9), circumferentially spaced around the one of the supports (3, 33) to which the arms (6, 7) are attached.

12. Apparatus of any preceding claim, wherein the frame (1) comprises a plurality of frame segments (1a, 1b, 1c) arranged to be assembled around the structure.

13. Apparatus of claim 12, wherein an adjacent pair of the frame segments (1a, 1b, 1c) are hingedly connected together.

14. Apparatus of any preceding claim, including a distance sensor for sensing a distance travelled by the apparatus along the structure.

15. Apparatus of claim 14, wherein the distance sensor comprises a wheel (43) arranged to contact the structure.

## Patentansprüche

1. Vorrichtung zum Warten eines Tragwerks, umfassend:
einen Rahmen (1) zur Montage oder Anordnung um das Tragwerk, wobei der Rahmen (1) einen oberen und einen unteren Träger (3, 4), die an axialen Enden des Rahmens (1) bereitgestellt sind, und einen mittleren Träger (33), der zwischen den gegenüberliegenden Enden des Rahmens (1) bereitgestellt ist, umfasst, die durch sich vertikal erstreckende Streben (5) miteinander verbunden sind, um ein allgemein zylindrisches Tragwerk zu bilden;
mindestens ein Paar aus einem ersten und einem zweiten Arm (6, 7), die an proximalen Enden derselben schwenkbar an dem mittleren Träger (33) angebracht sind; und
mindestens ein Paar aus einem ersten und einem zweiten Drehelement (8, 9), die zum Kontakt mit dem Tragwerk an distalen Enden des jeweiligen ersten bzw. zweiten Arms (6, 7) angebracht sind;
wobei der erste und der zweite Arm (6, 7) schwenkbar sind, um das entsprechende erste und das entsprechende zweite Drehelement (8, 9) auf das Tragwerk zu oder davon weg zu bewegen;
**dadurch gekennzeichnet, dass**:
sich der erste und der zweite Arm (6, 7) in axial entgegengesetzte Richtungen erstrecken;
und dadurch, dass:
mindestens einer von dem ersten und dem zweiten Arm (6, 7) dazu angeordnet ist, zwischen benachbarten der Streben (5) hindurchzugelangen, sodass das entsprechende erste oder das entsprechende zweite Drehelement (8, 9) mit dem Tragwerk in Kontakt gelangen kann.

2. Vorrichtung nach Anspruch 1, umfassend einen Schlitten (15), der zur Umfangsbewegung an oder in der Nähe eines axialen Endes des Rahmens (1) angeordnet ist, wobei der Schlitten (15) ein oder mehrere Werkzeuge (22) zum Warten des Tragwerks trägt oder dazu angeordnet ist, diese zu tragen.

3. Vorrichtung nach einem der vorangehenden Ansprüche, umfassend Verbindungsmittel (35) zum abbaubaren Verbinden der Vorrichtung mit einem oder mehreren Modulen (34) zum Warten des Tragwerks.

4. Vorrichtung zum Warten eines Tragwerks, umfassend:
einen Rahmen (1) zur Montage oder Anordnung um das Tragwerk, wobei der Rahmen (1) einen ersten und einen zweiten Träger (3, 4) an axial gegenüberliegenden Enden desselben umfasst, die durch sich axial erstreckende Streben (5) miteinander verbunden sind, um ein allgemein zylindrisches Tragwerk zu bilden;
mindestens ein Paar aus einem ersten und einem zweiten Arm (6, 7), die an proximalen Enden derselben schwenkbar an dem ersten Träger (3) angebracht sind; und
mindestens ein Paar aus einem ersten und einem zweiten Drehelement (8, 9), die zum Kontakt mit dem Tragwerk an distalen Enden des jeweiligen ersten bzw. zweiten Arm (6, 7) angebracht sind;
wobei der erste und der zweite Arm (6, 7) schwenkbar sind, um das entsprechende erste und das entsprechende zweite Drehelement (8, 9) auf das Tragwerk zu oder davon weg zu bewegen;
**dadurch gekennzeichnet, dass**:
sich der erste Arm und der zweite Arm (6, 7) in axial entgegengesetzte Richtungen erstrecken, wobei der zweite Arm dazu angeordnet ist, zwischen benachbarten der Streben hindurchzugelangen, sodass das zweite Drehelement mit dem Tragwerk in Kontakt gelangen kann;
und ferner **gekennzeichnet durch**:
einen Schlitten (15), der zur Umfangsbewegung an oder in der Nähe des zweiten Trägers (4) angeordnet ist, wobei der Schlitten (15) ein oder mehrere Werkzeuge (22) zum Warten des Tragwerks trägt oder dazu angeordnet ist, diese zu tragen.

5. Vorrichtung nach Anspruch 4, umfassend eine Führungsschiene (14) zum Führen des Schlittens (15) in Umfangsrichtung, wobei die Führungsschiene (14) an dem zweiten Träger (4) angebracht ist.

6. Vorrichtung nach einem der Ansprüche 2 bis 5, umfassend eine Bahn (17), die in Umfangsrichtung um den Rahmen (1) angeordnet ist, wobei der Schlitten (15) ein Antriebselement (16) aufweist, dass in die Bahn (17) eingreift und antreibbar ist, um den Schlitten (15) um die Bahn (17) zu bewegen.

7. Vorrichtung nach einem der Ansprüche 2 bis 6, umfassend Mittel zum Antreiben des einen oder der mehreren Werkzeuge (22) relativ zu dem Schlitten (15).

8. Vorrichtung nach einem der Ansprüche 2 bis 7, umfassend das eine oder die mehreren auf dem Schlitten (15) getragenen Werkzeuge (22), wobei das eine oder die mehreren Werkzeuge (22) mindestens eines von einem Reinigungswerkzeug, einem Wandstärken-Messwerkzeug, einer Videokamera, einem Abstandssensor, einem Anstreichwerkzeug, einem Umwickelwerkzeug und einem Schneidwerkzeug umfassen.

9. Vorrichtung nach einem der Ansprüche 2 bis 8, umfassend einen Umfangslagensensor zum Erfassen einer Umfangslage des Schlittens.

10. Vorrichtung nach einem der vorangehenden Ansprüche, umfassend Mittel (10, 11) zum Antreiben des ersten und/oder des zweiten Arms (6, 7), um auf das Tragwerk zu zu schwenken und das jeweilige Drehelement (8, 9) mit dem Tragwerk in Kontakt zu bringen.

11. Vorrichtung nach einem der vorangehenden Ansprüche, umfassend eine Vielzahl der Paare aus einem ersten und einem zweiten Arm (6, 7) und einem ersten und einem zweiten Drehelement (8, 9), die in Umfangsrichtung um den einen der Träger (3, 33), an dem die Arme (6, 7) angebracht sind, in Abständen angeordnet sind.

12. Vorrichtung nach einem der vorangehenden Ansprüche, wobei der Rahmen (1) eine Vielzahl von Rahmensegmenten (1a, 1b, 1c) umfasst, die dazu angeordnet sind, um das Tragwerk montiert zu werden.

13. Vorrichtung nach Anspruch 12, wobei ein benachbartes Paar der Rahmensegmente (1a, 1b, 1c) gelenkig miteinander verbunden sind.

14. Vorrichtung nach einem der vorangehenden Ansprüche, umfassend einen Streckensensor zum Erfassen einer Strecke, die die Vorrichtung entlang des Tragwerks zurückgelegt hat.

15. Vorrichtung nach Anspruch 14, wobei der Streckensensor eine für den Kontakt mit dem Tragwerk angeordnete Rolle (43) umfasst.

## Revendications

1. Appareil servant à des fins d'entretien d'une structure, comportant :
un châssis (1) destiné à être assemblé ou agencé autour de la structure, le châssis (1) comprenant des supports supérieur et inférieur (3, 4) mis en œuvre au niveau d'extrémités axiales du châssis (1) et un support intermédiaire (33) mis en œuvre entre lesdites extrémités opposées du châssis (1), reliés ensemble par des entretoises s'étendant à la verticale (5) pour former une structure généralement cylindrique ;
au moins une paire de premier et deuxième bras (6, 7) attachés de manière pivotante au niveau d'extrémités proximales de celui-ci sur le support intermédiaire (33) ; et
au moins une paire de premier et deuxième éléments rotatifs (8, 9), attachés au niveau d'extrémités distales des premier et deuxième bras respectifs (6, 7), à des fins de contact avec la structure ;
les premier et deuxième bras (6, 7) étant en mesure de pivoter de manière à déplacer les premier et deuxième éléments rotatifs correspondants (8, 9) vers ou à l'opposé de la structure ;
**caractérisé en ce que** :
les premier et deuxième bras (6, 7) s'étendent dans des directions opposées dans le sens axial ;
et **en ce que** :
au moins l'un des premier et deuxième bras (6, 7) est agencé pour passer entre des entretoises adjacentes parmi les entretoises (5) de telle sorte que le premier ou deuxième élément rotatif correspondant (8, 9) est capable d'entrer en contact avec la structure.

2. Appareil selon la revendication 1, comprenant un chariot (15) agencé à des fins de mouvement circonférentiel au niveau ou à proximité d'une extrémité axiale du châssis (1), le chariot (15) portant, ou étant agencé pour porter, un ou plusieurs outils (22) servant à des fins d'entretien de la structure.

3. Appareil selon l'une quelconque des revendications précédentes, comprenant un moyen de liaison (35) servant à relier de manière amovible l'appareil à un ou plusieurs modules (34) servant à des fins d'entretien de la structure.

4. Appareil servant à des fins d'entretien d'une structure, comportant :
un châssis (1) destiné à être assemblé ou agencé autour de la structure, le châssis (1) comprenant des premier et deuxième supports (3, 4) au niveau d'extrémités opposées dans le sens axial de celui-ci, reliés ensemble par des entretoises s'étendant dans le sens axial (5) pour former une structure généralement cylindrique ;
au moins une paire de premier et deuxième bras (6, 7) attachés de manière pivotante au niveau d'extrémités proximales de celui-ci sur le premier support (3) ; et
au moins une paire de premier et deuxième éléments rotatifs (8, 9) attachés au niveau d'extrémités distales des premier et deuxième bras respectifs (6, 7), à des fins de contact avec la structure ;
les premier et deuxième bras (6, 7) étant en mesure de pivoter de manière à déplacer les premier et deuxième éléments rotatifs correspondants (8, 9) vers ou à l'opposé de la structure de support ;
**caractérisé en ce que** :
les premier et deuxième bras (6, 7) s'étendent dans des directions opposées dans le sens axial, le deuxième bras étant agencé pour passer entre des entretoises adjacentes parmi les entretoises, de telle sorte que le deuxième élément rotatif est capable d'entrer en contact avec la structure ;
et par ailleurs **caractérisé par** :
un chariot (15) agencé à des fins de mouvement circonférentiel au niveau ou à proximité du deuxième support (4), le chariot (15) portant, ou étant agencé pour porter, un ou plusieurs outils (22) servant à des fins d'entretien de la structure.

5. Appareil selon la revendication 4, comprenant un rail de guidage (14) servant à guider le chariot (15) dans le sens de la circonférence, le rail de guidage (14) étant attaché au deuxième support (4).

6. Appareil selon l'une quelconque des revendications 2 à 5, comprenant un chemin de roulement (17) agencé dans le sens de la circonférence autour du châssis (1), le chariot (15) ayant un élément d'entraînement (16) qui se met en prise avec le chemin de roulement (17) et qui est en mesure d'être entraîné de manière à déplacer le chariot (15) autour du chemin de roulement (17).

7. Appareil selon l'une quelconque des revendications 2 à 6, comprenant un moyen servant à entraîner lesdits un ou plusieurs outils (22) par rapport au chariot (15).

8. Appareil selon l'une quelconque des revendications 2 à 7, comprenant lesdits un ou plusieurs outils (22) portés sur le chariot (15), lesdits un ou plusieurs outils (22) comportant au moins l'un parmi un outil de nettoyage, un outil de mesure de l'épaisseur de la paroi, une caméra vidéo, un capteur de jeu, un outil de peinture, un outil d'emballage et un outil de découpe.

9. Appareil selon l'une quelconque des revendications 2 à 8, comprenant un capteur de position circonférentielle servant à détecter une position circonférentielle du chariot.

10. Appareil selon l'une quelconque des revendications précédentes, comprenant un moyen (10, 11) servant à entraîner les premier et/ou deuxième bras (6, 7) de manière à faire pivoter vers la structure et amener l'élément rotatif respectif (8, 9) en contact avec la structure.

11. Appareil selon l'une quelconque des revendications précédentes, comprenant une pluralité desdites paires de premier et deuxième bras (6, 7) et de premier et deuxième éléments rotatifs (8, 9), espacés dans le sens de la circonférence autour dudit l'un des supports (3, 33) sur lesquels les bras (6, 7) sont attachés.

12. Appareil selon l'une quelconque des revendications précédentes, dans lequel le châssis (1) comporte une pluralité de segments de châssis (1a, 1b, 1c) agencés pour être assemblés autour de la structure.

13. Appareil selon la revendication 12, dans lequel une paire adjacente des segments de châssis (1a, 1b, 1c) sont reliés ensemble de manière articulée.

14. Appareil selon l'une quelconque des revendications précédentes, comprenant un capteur de distance servant à détecter une distance parcourue par l'appareil le long de la structure.

15. Appareil selon la revendication 14, dans lequel le capteur de distance comporte une roue (43) agencée pour entrer en contact avec la structure.
